# EUROPEAN PATENT APPLICATION

(11) **EP 2 136 277 A1**
(43) Date of publication of application: **23.12.2009**
(21) Application number: 08425394.7
(22) Date of filing: 30.05.2008
(51) Int. Cl.: G05D 23/02, G05D 23/13

(54) **Thermostatic cartridge**

(71) Applicant: Mora, Maurizio, 20021 Bollate MI (IT)
(72) Inventor: Mora, Maurizio, 20021 Bollate MI (IT)
(74) Representative: Valentini, Giuliano

(57) **Abstract**

There is described a thermostatic cartridge for taps, mixers, radiators for heating systems or, in general, for the thermoregulation of hydraulic systems, including a thermosensor provided with a moving stem and a valve seat in which a moving shutter is placed, wherein the stem and the shutter have separate axes and wherein mechanical means are provided to transmit motion between the stem and the shutter.

## Description

The present invention relates to a thermostatic cartridge and, in particular a thermostatic cartridge intended to be incorporated in taps, mixers, radiators for heating systems and, in general for the thermoregulation of hydraulic systems.

Taps and mixers incorporating thermostatic cartridges capable of automatically regulating the temperature of the water delivered on the basis of the setting of a user, and of cutting off the flow of the water delivered if the temperature thereof exceeds a predetermined threshold, are well known.

Some examples of known thermostatic devices are described in the German patent no. DE-10202560 and in the international application no. WO-2005/103853. In general, a thermostatic cartridge comprises a valve assembly with a moving shutter and temperature sensitive means capable of moving the shutter to decrease or increase the inflow of hot water with respect to the cold water, or vice versa, so that the mixed water delivered from the cartridge can be maintained at a temperature as close as possible to the temperature set by the user.

Besides regulating the output temperature of the mixed water, these devices must in any case also guarantee a certain degree of safety against sudden temperature changes, and therefore have a particularly rapid response to variations of the temperature.

In thermostatic cartridges of known type, the temperature sensing means are generally composed of a thermosensor, for example a "wax bulb" having a body comprising a sensing portion (bulb) containing the wax subject to thermal dilation and contraction, and a moving stem with axis coinciding with that of the shutter.

This shutter is integral with the body of the thermosensor while the moving stem interacts with the kinematic control mechanism, along which there is interposed a spring to compensate the differences between the maximum stroke of the stem, generally about 5 mm, and the maximum stroke available to the shutter inside the valve seat, generally of only 0.6-0.5 mm.

The stroke of the shutter is limited above all to move the shutter with the response speed required to rapidly compensate any temperature variations, and to shut off the flow of hot water delivered in the case in which the temperature of the water delivered might cause the risk of burns.

The limited stroke of the shutter inevitably means that the inlets for hot and cold water have a somewhat limited section.

This could cause clogging of the inlets due to scale or other particles that deposit in these inlets, further reducing the section or blocking them completely, with consequent malfunction of the cartridge.

The task of the present invention is therefore to provide a thermostatic cartridge that allows the limits of prior art to be overcome.

Within this task, an object of the present invention is to provide a thermostatic cartridge that allows the actuating system to be used more efficiently through a common thermosensor such as a wax bulb.

Another object of the present invention is to provide a thermostatic cartridge of the aforesaid type capable of improving the mixing of hot and cold water.

A further object of the present invention is to provide a thermostatic cartridge of the aforesaid type that allows a more rapid and precise response speed to be obtained when the temperature varies with respect to the set temperature.

These objects are achieved by the present invention, which relates to a thermostatic cartridge for taps, mixers, radiators or for thermoregulation of hydraulic systems in general, including a cartridge body having at least one inlet duct for hot water, at least one inlet duct for cold water and at least one outlet duct for mixed water; a seat containing a thermosensor provided with a moving stem; a valve seat in which there is disposed a moving shutter and in which there are produced at least one inlet for hot water, at least one inlet for cold water and at least one outlet for mixed water.

According to the present invention, the stem and the shutter have separate axes and mechanical means are provided to transmit motion between the stem and the shutter.

In this way, the transmission ratio of the mechanical means interposed between the stem and the shutter can be selected in the design stage to make the most efficient use of the stroke of the thermosensor stem.

In particular, separation of the axis of the shutter and the axis of the stem allows the space available for the stroke of the shutter to be increased and, consequently, the section of the inlets for hot water and cold water can be increased.

Besides preventing the inlets from becoming clogged with scale or other suspended particles present in the system, increase in the sections of the inlets, with the same pressure of the system, decreases the speed of the water flowing through the inlets and allows improved mixing of hot and cold water in the cartridge to be achieved before delivery.

The mechanical motion transmission means also allow the transmission ratio between the stem of the thermosensor and the shutter to be varied, thus allowing, in the design stage, not only the selection of an optimal ratio between the respective strokes, but also the selection of an optimal ratio between the response speed of the thermosensor and the shutter movement speed.

In a possible embodiment of the present invention, the motion transmission means include a rocker arm having a first end placed in contact with a first thrust element connected to the stem of the thermosensor, a second end placed in contact with a second thrust element connected to the shutter, and a pin for rotation of the rocker arm placed between the first and the second end.

This embodiment is particularly simple to construct and allows high versatility during the design stage, as it is sufficient to set the position of the rotation pin of the rocker arm to obtain the desired transmission ratio between the stem of the thermosensor and the shutter.

In this embodiment, there is preferably provided a moving rod that translates along a direction parallel to the axis thereof. The pin of the rocker arm is mounted pivoted at one end of the rod to allow rotation of the rocker arm with respect to the axis of the pin. The pin of the rocker arm is thrust by the end of the rod and housed in a specific seat, such as a slot.

The desired temperature can therefore by easily set by varying the position of the rod with respect to the cartridge body. In this respect, means are appropriately provided to act on the moving rod to control variation of position and to hold the rocker arm in position, for example a knob disposed outside the cartridge and engaged by screwing onto a threaded end of the rod.

Due to the arrangement of the stem and the shutter on separate axes, it is also possible to provide a more effective arrangement of the sensing portion (or bulb) containing the wax, or in any case of the thermosensor. In the preferred embodiment of the present invention, the thermosensor has the sensing portion thereof disposed in the outlet duct for mixed water, so as to detect in a particularly precise and reliable manner the temperature of the mixed water effectively delivered.

Further characteristics and advantages of the present invention will be more apparent from the description below with reference to the attached schematic drawings, wherein:
- Figure 1 is a section view of a tap or mixer in which a thermostatic cartridge according to the present invention is inserted;
- Figure 2 is an enlarged view of a detail showing the kinematic mechanism between the thermosensor and the shutter, with the latter in the position to close the cold water inlet; and
- Figure 3 is an enlarged view similar to that of Figure 2, with the shutter in the position to close the hot water inlet. Figure 1 shows a tap or mixer 1 in which a thermostatic cartridge 10 according to the present invention is installed. The tap or mixer 1 includes a fitting 2 for supplying hot water, a fitting 3 for supplying cold water and a fitting 4 for delivering mixed water.

In the body I 1 of the cartridge 10, at the fitting 2, there is provided a duct 12 that supplies hot water to one or more inlets 22 of the valve seat in which the shutter 20 is housed. At the fitting 3 there is instead provided a duct 13 that supplies cold water to one or more inlets 23 of the valve seat. In the lower part of the valve seat there is also provided an outlet 24 that supplies mixed water to a duct 14 that leads into the outlet fitting 4.

Parallel to the valve seat, in the body 11 of the cartridge 10 there is provided a seat housing a thermosensor 30, such as a wax bulb, which has a sensing portion 31 (or bulb) and a moving stem 32 acting on a piston 33. The sensing portion 31 is disposed in the outlet duct 14 to allow precise sensing of the effective temperature of the mixed water that flows out through the outlet fitting 4.

The shutter 20 is movable in translation along a direction parallel to the axis S thereof and the stem 32 of the thermosensor 30 is movable in translation along a direction parallel to the axis B thereof.

The translation movement of the stem 32 is transmitted to the shutter 20 by mechanical motion transmission means which, in the embodiment represented here by way of example, include a rocker arm 40 that oscillates about a rotation pin 41.

The pin 41 of the rocker arm 40 is mounted at the end of a rod 50 that is movable in translation along a direction parallel to the axis thereof and which can be selectively translated or held in position to allow the rocker arm 40 to move toward or away from the cartridge 10 and thus set the desired temperature for the water delivered.

Translational movement of the rod, and therefore setting of the temperature by a user, can be implemented, for example, by means of a knob 55 engaged by screwing onto the threaded end 52 of the rod 50 and held in an axially fixed position, with possibility of rotation, with respect to the tap or mixer 1.

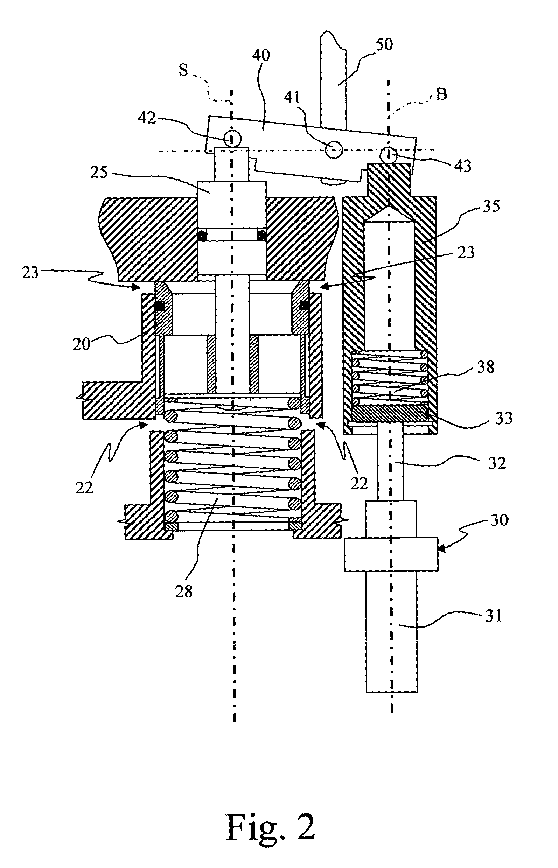

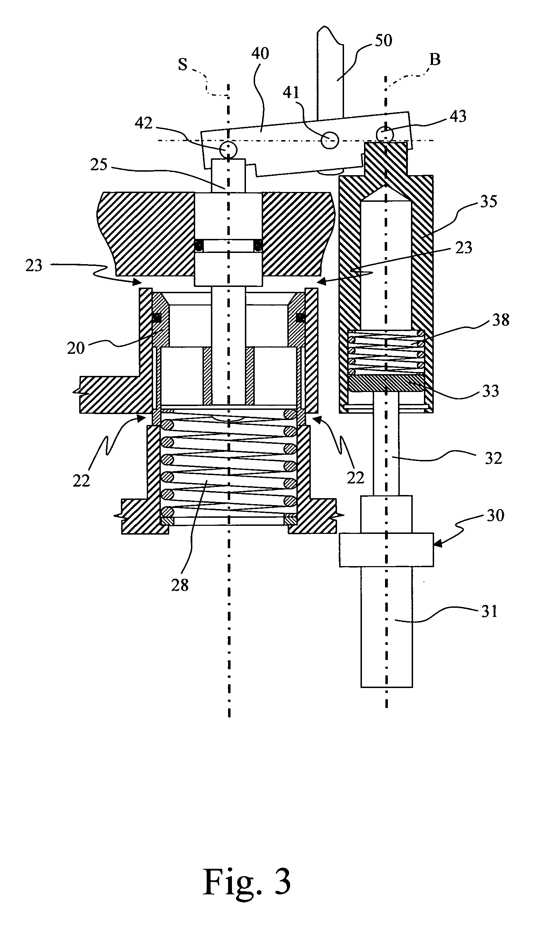

Figures 2 and 3 show in greater detail the kinematic mechanism that connects the thermosensor 30 and the shutter 20.

The moving stem 32 acts on a piston 33 disposed inside a first thrust element 35 which has an end thereof placed in contact with the rocker arm 40 at one end 43 thereof, schematized in the drawings as a pin resting on the upper end of the thrust element 35.

The opposite end 42 of the rocker arm 40 is in turn placed in contact with a second thrust element 25, to which the shutter 20 is constrained. Also in this case the end 42 of the rocker arm 40 is schematized in the drawings as a pin resting on the upper end of the thrust element 25.

The kinematic mechanism includes an opposing spring 28 that acts directly on the shutter 20 to oppose the thrust of the stem 32 and a compensating spring 38 is also provided, with the function of absorbing the difference between the maximum stroke of the stem 32 and the maximum stroke of the shutter 20.

The spring 38 prevents damage to the thermosensor 30 when the stem 32, as a result of the temperature, continues its outward stroke from the thermosensor while the shutter has already reached the position of maximum travel (condition represented in Figure 3).

In the embodiment represented here, the compensating spring 38 is interposed between the moving stem 32, resting on the piston 33, and the thrust element 35, thus being housed in the latter. It is in any case appropriate to note that the compensating spring 38 can also be disposed with the same efficiency in other positions of the kinematic chain, for example between either of the ends of the rocker arm 40 and the respective thrust element on which it rests.

Both springs 28 and 38 also allow the thrust elements 25 and 35 to be maintained constantly in contact with the rocker arm 40.

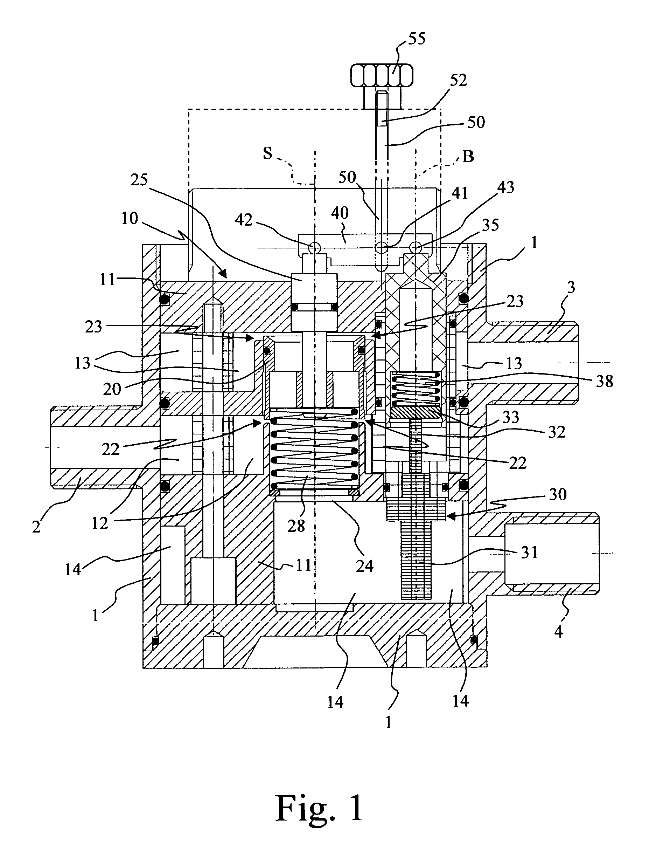

In the view of Fig. 1, the shutter 20 is in an intermediate mixing position, i.e. in a position in which the inlets 22 and 23, for hot water and cold water respectively, are partly closed by the shutter 20.

During operation, the shutter 20 is in any case movable between a first position (Figure 2) in which it closes the cold water inlets 23 while maintaining the hot water inlets 22 open, and a second position (Figure 3) in which it closes the hot water inlets 22 and instead maintains the cold water inlets 23 open.

In the condition represented in Figure 2, the shutter 20 is in the first position and the stem 32 of the thermosensor 30 is in the condition of minimum extension. In this case, only hot water is delivered, which flows through the inlets of the valve seat.

From this position, assuming that the temperature of the water delivered increases as a result of the passage of hot water only, the sensing portion 31 of the thermosensor 30, placed in the outlet duct 14 (Figure 1), starts to heat up and therefore the stem 32 is thrust increasingly toward the outside of the thermosensor 30 as a result of thermal dilation of the wax contained in the sensing portion or bulb 31.

The thrust of the stem 32 is transmitted to the thrust element 35 and then to the end 43 of the rocker arm 40. The latter, rotating about the pin 41, acts with the end 42 thereof on the thrust element 25, and then on the shutter 20 integral therewith, thrusting it downward in opposition to the elastic force exerted by the opposing spring 28.

The shutter 20 is then returned to an intermediate position, for example the one represented in Figure 1, in which mixed water at the desired temperature is delivered. In the condition represented in Figure 3, the shutter 20 is in the second position and the stem 32 of the thermosensor 30 is in the condition of maximum extension, which is also shown by the compression imparted to the compensating spring 28.

Starting from this position, assuming that the temperature of the water delivered decreases as a result of the passage of cold water alone, the stem 32 is returned toward the inside of the thermosensor 30 as a result of contraction of the wax inside the bulb 31.

As the stem 32 is withdrawn inside the thermosensor 30, the opposing spring 23 acts on the shutter 20 maintaining the thrust element 25 in contact with the end 42 of the rocker arm 40 and, as a result of rotation about the pin 41, also maintains the end 43 of the rocker arm 40 in contact with the end of the thrust element 35. The shutter 20 is thus returned to an intermediate position, in which mixed water at the desired temperature is delivered.

In the embodiment represented above in Figures 1-3, it can be noted that the rocker arm has arms of different length or, in other words, that the distance between the end 42 and the pin 41 is different from the distance between the end 43 and the pin 41. In this case, the stroke (or speed) of the stem 32 is translated into an increased stroke (or speed) for the shutter 20.

This shows that the motion transmission means can advantageously have a different transmission ratio to the unit ratio proposed by prior art, and that therefore, to make the most efficient and effective use of the maximum stroke of the stem 32, a transmission ratio can be chosen in the design stage.

Various modifications can be made to the embodiment represented here without departing from the scope of the present invention. For example, the axes S and B along which the shutter 20 and the stem 32 move respectively could also not be parallel.

The rocker arm 40 can also be replaced by equivalent motion transmission means, such are levers of various type, or a transmission mechanism of the "desmodromic" type, which could make the opposing spring 28 pointless, can be provided, as long as the motion transmission means allow the axes along which the shutter 20 and the stem 32 are moved to be maintained separate.

## Claims

1. A thermostatic cartridge for taps, mixers, radiators or for the thermoregulation of hydraulic systems in general, including:
- a cartridge body having at least one inlet duct for hot water, at least one inlet duct for cold water and at least one outlet duct for mixed water;
- a seat containing a thermosensor provided with a moving stem;
- a valve seat in which there is disposed a moving shutter and in which there are provided at least one inlet for hot water, at least one inlet for cold water and at least one outlet for mixed water,
**characterized in that** said stem and said shutter have separate axes and **in that** mechanical means are provided to transmit motion between said stem and said shutter.

2. The thermostatic cartridge as claimed in claim 1, wherein said motion transmission means include a rocker arm having a first end placed in contact with a first thrust element connected to the stem of said thermosensor, a second end placed in contact with a second thrust element connected to said shutter, and a pin for rotation of the rocker arm placed between said first and second ends.

3. The thermostatic cartridge as claimed in claim 1 or 2, wherein said motion transmission means include a moving rod that translates along a direction parallel to its axis, and wherein the pin of said rocker arm is pivoted at one end of said rod to allow rotation of the rocker arm with respect to the axis of said pin.

4. The thermostatic cartridge as claimed in claim 3, wherein means are provided to act on said moving rod to control variation of position and to hold said rocker arm in position with respect to the cartridge body.

5. The thermostatic cartridge as claimed in claim 1 or 2, wherein said motion transmission means include at least one compensating spring disposed along the kinematic chain formed by said motion transmission means.

6. The thermostatic cartridge as claimed in claim 5, wherein said compensating spring is interposed between the moving stem of said thermosensor and said first thrust element.

7. The thermostatic cartridge as claimed in claim 1 or 2, wherein said motion transmission means include at least one opposing spring acting on said shutter.

8. The thermostatic cartridge as claimed in claim 1, wherein said thermosensor includes a sensing portion disposed in said outlet duct for mixed water.
